# EUROPEAN PATENT APPLICATION

(11) **EP 4 331 378 A1**
(43) Date of publication of application: **06.03.2024**
(21) Application number: 22795882.4
(22) Date of filing: 28.04.2022
(51) Int. Cl.: A23L 7/157, A23L 5/10, A23L 13/00

(54) **MODIFIED STARCHY POWDER PRODUCTION METHOD, FRIED FOOD BATTER MATERIAL, AND FRIED FOOD PRODUCTION METHOD**

(30) Priority: 28.04.2021 JP 2021076844
(71) Applicant: Nisshin Seifun Welna Inc., Tokyo 101-8441 (JP)
(72) Inventor: YAMAZAKI, Shuhei, Tokyo 103-8544 (JP); KAWASAKI, Hidetoshi, Tokyo 103-8544 (JP)
(74) Representative: Forstmeyer, Dietmar
(86) International application number: PCT/JP2022/019250
(87) International publication number: WO 2022/230969

(57) **Abstract**

A method for producing a modified starchy powder of the present invention includes a step of adding 0.2 to 5 parts by mass of a monovalent or divalent metal salt, in terms of the mass of metal ions, to 100 parts by mass of a starchy powder to obtain a mixture, and a heating step of heating the mixture so that the temperature of the starchy powder is in a range of 70°C to 130°C. Preferably, the method includes a step of adjusting the moisture content of the mixture to 12 to 22 mass% prior to the heating step. According to the present invention, it is possible to produce fried coated food in which a coating has excellent adhesion to a solid ingredient and also has excellent flavor and texture.

## Description

### Technical Field

The present invention relates to a modified starchy powder suitable for a coating material for fried coated food.

### Background Art

Starchy powder, such as wheat flour and starch, is used as an ingredient flour of bread, noodle doughs, coating materials for fried coated food, and the like, or a food material such as a base material for sauces, and is also used as flour for preventing doughs from sticking to workers' hands or tools during the production of bread or noodle doughs. Starchy powder does not necessarily have good workability as an ingredient of food because, when starchy powder is mixed with water, due to the properties of starchy powder, the mixture tends to be uneven and lumpy or tends to be sticky. In the case of fried coated food made by cooking a solid ingredient coated with a coating material, such properties of starchy powder are used to attach starchy powder to the solid ingredient as the coating material, but on the other hand, when heated, starchy powder becomes sticky or hard, causing the coating material of the fried coated food to have a strong greasy flavor, which can result in a lack of unity between the taste of the solid ingredient and the taste of the coating material.

In view of these problems with starchy powder, research has been conducted to improve starchy powder, and various modified starchy powders have been proposed. Patent Literature 1 discloses that a granulated wheat flour having good workability with less formation of lumps of flour and less scattering of flour is obtained by granulating a raw material powder containing wheat flour with water under non-heated conditions, specifically, under temperature conditions that do not increase the degree of gelatinization of the raw material powder by 5% or more during the granulation process. Patent Literature 2 discloses that a wheat flour that exhibits a non-cohesive and smooth texture when dispersed in water and heated can be obtained by dehydrating a wheat flour and then heat treating the dehydrated wheat flour at 100°C or above. Patent Literature 3 discloses that a modified wheat flour that is obtained by subjecting a raw material wheat flour to a wet heat treatment or a dry heat treatment and that has an RVA peak viscosity and a gelatinization onset temperature within respective specific ranges is suitable for a coating of fried coated food because it has good workability with good dispersibility in water. Patent Literature 4 discloses, as a wheat flour for fried coated food, a modified wheat flour that is obtained through a wet heat treatment followed by drying and milling and that has a specific particle size, a specific degree of gelatinization, and a specific viscosity, and also discloses, as conditions for the wet heat treatment, conditions in which wheat flour is heated at 110°C to 130°C for 10 to 20 minutes under 1 atm.

### Citation List

### Patent Literature

Patent Literature 1: JP 2014-200208A
Patent Literature 2: US 5720822A
Patent Literature 3: US 2019014801A1
Patent Literature 4: JP 2008-67675A

### Summary of Invention

Conventionally proposed modified starchy powders have room for improvement in terms of adhesion of a coating to a solid ingredient in fried coated food, for example. In order to compensate for the insufficient adhesion of the coating, a method has been proposed in which a thickening agent and the like are added to a starchy powder, but there are cases where this method degrades the flavor and texture of the coating of fried coated food. A technology that can achieve both a high level of adhesion of the coating and excellent flavor and texture of the coating has not yet been provided.

It is an object of the present invention to provide a technology that can improve the adhesion of a coating of fried coated food and the flavor and texture of the coating.

The present invention provides a method for producing a modified starchy powder, the method including a step of adding 0.2 to 5 parts by mass of a monovalent or divalent metal salt, in terms of the mass of metal ions, to 100 parts by mass of a starchy powder to obtain a mixture, and a heating step of heating the mixture so that the temperature of the starchy powder is in a range of 70°C to 130°C.

The present invention also provides a coating material for fried coated food, the coating material containing a modified starchy powder produced using the production method of the present invention described above.

The present invention also provides a method for producing fried coated food, the method including a step of attaching a coating material containing a modified starchy powder produced using the production method of the present invention described above to a solid ingredient and then cooking the solid ingredient.

### Description of Embodiments

In a method for producing a modified starchy powder of the present invention, a starchy powder is used as a raw material. As the starchy powder, any starchy powders that are derived from grain and are in powder form at normal temperature and pressure and that are conventionally used in coating materials to be attached to solid ingredients when producing fried coated food can be used without limitation, and specific examples include unmodified cereal flour and starch that have not been subjected to treatment such as heating. In the present invention, a single starchy powder may be used alone, or two or more starchy powders may be used in combination.

Examples of the cereal flour include wheat flour (strong wheat flour, semi-strong wheat flour, medium wheat flour, soft wheat flour, durum wheat flours, and whole wheat flour), barley flour, rice flour, sorghum flour, and the like.

Examples of the starch include tapioca starch, potato starch, corn starch, wheat starch, and the like. The term "starch" here refers to, unless otherwise stated, "pure starch" isolated from a plant such as wheat, and is distinguished from the starch inherently contained in cereal flour.

In the method for producing a modified starchy powder of the present invention, a monovalent or divalent metal salt is added to a starchy powder to obtain a mixture, and the mixture is heated under specific conditions. Performing a heat treatment on a starchy powder in coexistence with a monovalent or divalent metal salt in this manner makes it possible to further improve the adhesion of a coating of fried coated food and the flavor and texture of the coating when compared with conventional methods in which a heat treatment is performed on a starchy powder alone.

The method for producing a modified starchy powder of the present invention includes a step (mixture preparation step) of adding a specific amount of a monovalent or divalent metal salt to a starchy powder to obtain a mixture. There is no particular limitation on the monovalent or divalent metal salt as long as it is a monovalent or divalent metal salt that can be used for food, and examples thereof include: inorganic salts such as sodium chloride, potassium chloride, sodium sulfate, magnesium sulfate, tripotassium phosphate, and dipotassium hydrogenphosphate; and organic salts such as sodium citrate and calcium lactate. Among these, inorganic salts of alkali metals or alkaline earth metals are preferable, and chlorides or sulfates of alkali metals or alkaline earth metals are more preferable. Chlorides or sulfates of sodium, potassium, magnesium, and calcium are even more preferable when consideration is also given to safety and ease of availability.

In the mixture preparation step, there is no particular limitation on the method for mixing the starchy powder and the monovalent or divalent metal salt, and, for example, a method in which a monovalent or divalent metal salt that is in powder form at normal temperature and pressure is added to and mixed with a starchy powder while still in powder form and a method in which a monovalent or divalent metal salt is converted into liquid form before being added to a starchy powder are conceivable. In particular, the latter method is preferred because the predetermined advantageous effect of the present invention can be obtained more reliably. In the latter method, a liquid that is mixed with the monovalent or divalent metal salt to convert the metal salt into liquid form is not particularly limited, but is preferably water, and a method in which an aqueous solution of the monovalent or divalent metal salt is added to the starchy powder is particularly preferred. The concentration of the monovalent or divalent metal salt in such an aqueous metal salt solution is not particularly limited and can be adjusted as appropriate according to the types of the starchy powder and the metal salt, for example, but in general, the concentration is preferably about 0.2 to 5 mass% of the total mass of the aqueous metal salt solution.

In the mixture preparation step, the amount of the monovalent or divalent metal salt added to the starchy powder is 0.2 to 5 parts by mass, preferably 0.3 to 3 parts by mass, or more preferably 0.4 to 1 parts by mass based on the mass of metal ions in the metal salt, with respect to 100 parts by mass of the starchy powder. If the amount of the monovalent or divalent metal salt added to the starchy powder is less than 0.2 parts by mass in terms of metal ions, the predetermined advantageous effect of the present invention will not be obtained, and if the amount is greater than 5 parts by mass in terms of metal ions, the flavor and texture of fried coated food produced using this may be degraded.

In the mixture preparation step, in addition to the monovalent or divalent metal salt, an additional component that can be used for food may be added to the starchy powder as long as the predetermined advantageous effect of the present invention can be obtained. Examples of the additional component include an oil/fat, a dispersing agent, a lubricant, an emulsifier, and the like, and one of these components may be used alone, or two or more thereof may be used in combination. There are no particular limitations on the method and timing of addition of the additional component, and, for example, a mixture of the aqueous metal salt solution and the additional component may be added to the starchy powder. A preferred example of the additional component is an oil/fat. When the monovalent or divalent metal salt and an oil/fat are used together as an additive to the starchy powder, the starchy powder and the monovalent or divalent metal salt can be mixed more uniformly than when an oil/fat is not used. The amount of the additional component added is not particularly limited and can be adjusted as appropriate according to the type of the additional component, for example, but from the viewpoint of achieving a balance between the significance of using the additional component and the suppression of effects of the additional component, the amount is preferably 0.05 parts by mass or greater, more preferably 0.07 parts by mass or greater, or even more preferably 0.1 parts by mass or greater, and preferably 5 parts by mass or less, more preferably 3 parts by mass or less, or even more preferably 1 part by mass or less, with respect to 100 parts by mass of the starchy powder.

The method for producing a modified starchy powder of the present invention includes a heating step of heating the mixture prepared in the mixture preparation step so that the temperature of the starchy powder in the mixture is in a range of 70°C to 130°C. Although the heating step may be performed after the mixture prepared in the mixture preparation step has been stored in a predetermined environment for a predetermined period of time, it is preferable to perform the heating step immediately after the mixture preparation step in order to ensure that the predetermined advantageous effect of the present invention is more reliably obtained. Specifically, for example, it is preferable to perform the heating step within 48 hours immediately after performing the mixture preparation step.

There is no particular limitation on the treatment for heating the mixture in the heating step as long as the heat treatment does not scorch the starchy powder in the mixture, and examples thereof include: a heat treatment of heating an object to be heated using heated steam or a heated air flow; a heat treatment that is performed in a high-temperature atmosphere with little convection; a heat treatment that uses a heating medium such as a metal; and the like. As a heating apparatus used to perform the heating step, a heating apparatus capable of performing such a heat treatment is preferable, and examples of such a heating apparatus include an oven, a pot, a stirring apparatus or an extrusion apparatus equipped with a heating means, and the like.

An example of a heating apparatus that can be suitably used to perform the heating step is a heat-treating and stirring apparatus disclosed in Japanese Patent No. 4112910. This heat-treating and stirring apparatus includes a cylindrical container for containing an object to be treated, a hollow rotating shaft that is provided inside the cylindrical container, a hollow pipe screw that is formed in communication with the rotating shaft, and a steam supply source that supplies steam into the rotating shaft and the pipe screw, and the heat-treating and stirring apparatus is configured to be able to perform a heat treatment by supplying steam into the rotating shaft and the pipe screw to transfer heat to the rotating shaft and the pipe screw and allowing the transferred heat to propagate to the object to be treated.

In addition, in the heating step, as long as the predetermined advantageous effect of the present invention can be obtained, an additional treatment may be performed simultaneously with the heating of the mixture, and examples of the additional treatment include pressurization using air pressure or another pressurizing means, stirring, and the like.

In the heating step, two or more different heat treatments with different heating conditions (heating temperature, heating time, heating environment such as air pressure, etc.) may be used in combination. An example in which a plurality of heat treatments are combined as described above is a process in which the mixture to be heated is contained in a containing space of the heating apparatus, the space is hermetically sealed, the mixture is then heated under hermetically sealed conditions, and after that, the hermetically sealed conditions are canceled, and the mixture is continuously heated in an open system (under atmospheric pressure conditions). In this heating process, it is sufficient that the temperature of the starchy powder in the mixture is in a range of 70°C to 130°C during at least one of the heating under the hermetically sealed conditions and the heating under the atmospheric pressure conditions. A specific example may be a process in which the mixture is first heated under hermetically sealed conditions so that the temperature of the starchy powder in the mixture is maintained at 110°C to 130°C for 1 to 3 hours, then the hermetically sealed space in which the mixture is contained is opened to satisfy atmospheric pressure conditions, and the mixture is heated so that the temperature of the starchy powder is maintained at 70°C to 100°C for 10 to 90 minutes. When a plurality of heat treatments with different heating conditions are combined as described above, the mixture that has undergone the preceding heat treatment (e.g., the heat treatment under hermetically sealed conditions) may be temporarily cooled before being subjected to the subsequent heat treatment (e.g., the heat treatment under atmospheric pressure conditions); however, from the viewpoint of ensuring that the predetermined advantageous effect of the present invention is more reliably obtained, it is preferable that the temperature of the starchy powder in the mixture is maintained at 70°C or above during the heating step.

Preferred heating conditions for the mixture in the heating step include the following conditions. The term "heating temperature" below refers to the temperature of the starchy powder in the mixture.
- Heating conditions 1: The heating temperature is maintained at 70°C to 130°C for 10 minutes to 240 hours.
- Heating conditions 2: The heating temperature is maintained at 70°C to 100°C for 12 minutes to 240 hours, or the heating temperature is maintained at 100°C to 130°C for 10 minutes to 12 hours.
- Heating conditions 3: The heating temperature is maintained at 70°C to 90°C for 72 to 240 hours, or the heating temperature is maintained at 100°C to 130°C for 10 minutes to 3 hours.

Among the heating conditions 1 to 3 described above, the heating conditions 3 are the most preferable, followed by the heating conditions 2 and the heating conditions 1 in that order.

In the present invention, the time for which the heating temperature is within the preferred range described above is typically a single continuous period of time, but encompasses a form in which it includes multiple periods of time that are discontinuous with each other, in which case it is preferable that the sum of the multiple periods of time falls within the preferred range described above.

The method for producing a modified starchy powder of the present invention may include a moisture conditioning step of adjusting the moisture content of the mixture to 12 to 22 mass%, or more preferably 14 to 18 mass%, prior to the heating step. The "moisture content" here refers to a value that is obtained using an absolute dry method. Typically, the "moisture content of the mixture" here is substantially the same as the "moisture content of the starchy powder in the mixture". The moisture conditioning step prior to the heating step enables the starchy powder and the monovalent or divalent metal salt to be more uniformly mixed in the mixture to be heated, and thus, the predetermined advantageous effect of the present invention can be obtained more reliably. Since wheat flour usually has a moisture content of about 10 to 14 mass%, the moisture conditioning step typically includes adding moisture to the mixture of the starchy powder and the monovalent or divalent metal salt. Water or steam can be used as the moisture that is added to the raw material wheat flour, and saturated steam is favorably used as the steam.

The method for producing a modified starchy powder of the present invention may include a step of cooling the mixture that has undergone the heating step, or in other words, the modified starchy powder. There is no particular limitation on the method for cooling the mixture in the cooling step, and examples include natural cooling, draft cooling, forced cooling in a refrigerator or the like, and the like.

In addition, the method for producing a modified starchy powder of the present invention may include a step of milling the starchy powder (modified starchy powder) that has undergone the heating step. There is no particular limitation on the method for milling the starchy powder that can be used in the milling step, and examples include roll milling, pin mill milling, impact milling, and the like.

Either the cooling step or the milling step described above may be performed first, or these steps may be performed simultaneously.

From the viewpoint of improving the adhesion of a coating to a solid ingredient in fried coated food and the flavor and texture of the coating, the average particle size of the modified starchy powder is preferably 300 µm or less, and more preferably 150 µm or less. From the same viewpoint, the lower limit of the average particle size of the modified starchy powder is preferably 10 µm or greater, and more preferably 15 µm or greater. The term "average particle size" here refers to a volume-based average particle size as measured using a laser diffraction scattering method (cumulative volume particle size D50 at 50% cumulative volume obtained by using a dry method). A commercially available laser diffraction particle size distribution measurement apparatus, for example, Microtrac MT 3000 II (available from Nikkiso Co., Ltd.) can be used as an apparatus for measuring the average particle size. The average particle size of the modified starchy powder can be adjusted in, for example, the milling step described above.

The modified wheat flour (hereinafter also referred to as "specific modified wheat flour") produced using the production method of the present invention described above is also useful for a coating material for fried coated food. The specific modified starchy powder can be used to produce various types of fried coated food, and examples thereof include karaage (Japanese-style deep-fried food), tatsuta-age (a variation of karaage), tempura, kakiage (mixed vegetable and/or seafood tempura), agedama (bits of deep-fried tempura batter), fried food (deep-fried food), fritters, and corn dogs. Specific examples of the fried food include pork cutlets, croquettes, fried shrimp/prawn, fried chicken, French fries, and the like.

The present invention encompasses a coating material for fried coated food, the coating material containing the modified starchy powder described above. The coating material for fried coated food of the present invention will be described mainly focusing on the differences from the method for producing a modified starchy powder of the present invention described above. For details of the coating material for fried coated food of the present invention that are not specifically described below, reference can be made to the description of the method for producing a modified starchy powder as appropriate.

There is no particular limitation on the amount of the specific modified starchy powder contained in the coating material for fried coated food of the present invention, and the amount can be adjusted as appropriate according to the type of fried coated food to be produced, for example. However, from the viewpoint of ensuring that the effect of the modified starchy powder is obtained more reliably, the amount of the specific modified starchy powder is preferably 10 mass% or greater, and more preferably 20 mass% or greater, with respect to the total mass of the coating material. Although the amount of the specific modified starchy powder contained in the coating material for fried coated food of the present invention may be 100 mass%, the amount is preferably 95 mass% or less, and more preferably 90 mass% or less, for example.

The coating material for fried coated food of the present invention typically contains at least one additional cereal flour component other than the specific modified starchy powder. As used herein, the term "cereal flour component" refers to a substance that is derived from grain and is in the form of a powder at normal temperature and pressure, and the concept thereof encompasses cereal flour and starch. The cereal flour and the starch are as described above. As the additional cereal flour component other than the specific modified starchy powder that can be contained in the coating material for fried coated food of the present invention, cereal flours and starches that have been modified through heat treatment may also be used, and, for example, a modified starch obtained by subjecting an unmodified starch (raw starch) to one or more processes such as gelatinization, etherification, esterification, acetylation, crosslinking, and oxidization may be used.

There is no particular limitation on the total amount of cereal flour components including the specific modified starchy powder contained in the coating material for fried coated food of the present invention, and the amount can be adjusted as appropriate according to the type of fried coated food to be produced using the coating material. In general, the total amount of the cereal flour components is preferably 40 to 95 mass%, and more preferably 60 to 90 mass%, with respect to the total mass of the coating material.

The coating material for fried coated food of the present invention may optionally further contain additional components other than the cereal flour component. As the additional components, components that usually can be added to this type of coating material for fried coated food can be used without limitation. Examples include: whole egg powder and egg white powder; oils and fats; saccharides such as dextrin, starch syrup, and sugar alcohols; salts; seasonings; leavening agents; emulsifiers; thickening agents; enzymes; and the like. Depending on the type fried coated food to be produced, for example, one of these may be used alone, or two or more thereof may be used in combination. The amount of the additional components is preferably within such a range that the total amount of the components contained in the coating material for fried coated food of the present invention excluding the specific modified starchy powder is 90 mass% or less with respect to the total mass of the coating material.

The coating material for fried coated food of the present invention is in the form of a powder at normal temperature and pressure. When using the coating material, it is possible to attach the coating material in the powder form to a solid ingredient, or mix the coating material with a liquid to obtain a coating solution (so-called batter) in the form of a liquid or a paste and then attach the coating solution to the surface of a solid ingredient. That is to say, the coating material for fried coated food of the present invention may be used as a dusting flour or a breader, or may be used as a material for a coating solution. Preferably, the coating material for fried coated food of the present invention is provided as a premix in the form of a powder, which is used in the powder form by being attached to a solid ingredient as a breader, or may be used as a material for a coating solution.

The present invention encompasses a method for producing fried coated food by using the specific modified starchy powder described above. The method for producing fried coated food of the present invention will be described mainly focusing on the differences from the method for producing a modified starchy powder and the coating material for fried coated food, of the present invention described above. For details of the method for producing fried coated food of the present invention that are not specifically described below, reference can be made to the description of the method for producing a modified starchy powder and the coating material for fried coated food described above, as appropriate.

The method for producing fried coated food of the present invention includes a step of attaching a coating material containing a specific modified starchy powder to a solid ingredient and then cooking the solid ingredient. The coating material for fried coated food of the present invention described above can be used as the "coating material containing a specific modified starchy powder".

In the method for producing fried coated food of the present invention, there is no particular limitation on the solid ingredient, and, for example, various types of foodstuffs including livestock meat, such as chicken, pork, beef, sheep meat, and goat meat; seafood, such as squid, shrimps/prawns, fish, and shellfish; vegetables; fake meat, such soybean meat; and the like can be used. The solid ingredient may optionally be seasoned before the coating material is attached thereto.

In the method for producing fried coated food of the present invention, there is no particular limitation on the method for attaching the coating material to the solid ingredient, and the coating material in the form of powder may be attached to the solid ingredient, or a coating solution in the form of a liquid or a paste in which the coating material is mixed with a liquid may be attached to the surface of the solid ingredient. Although water is commonly used, there is no particular limitation on the type of the liquid that is mixed with the coating material. For example, an aqueous liquid containing oil and/or seasonings, cow milk, stock, broth, or the like may also be used.

In the method for producing fried coated food of the present invention, after a first coating material containing the specific modified starchy powder is attached to a solid ingredient, a second coating material may be attached to the solid ingredient before the solid ingredient is cooked. There is no particular limitation on the composition of the second coating material. The second coating material may have a similar composition to that of the coating material for fried coated food of the present invention described above, and may or may not contain the specific modified starchy powder described above. In addition, the second coating material may be a breader (e.g., bread crumbs, karaage mix, cereal flour, starch flour, or the like), or may be a coating solution (e.g., egg liquid, coating solution for tempura or deep-fried breaded food, coating solution for karaage, or the like).

In the method for producing fried coated food of the present invention, cooking in oil is typically used as the method for cooking the solid ingredient coated with the coating material. However, other cooking methods such as grilling, for example, may also be used.

### Examples

Hereinafter, the present invention will be described in greater detail using examples. However, it is to be noted that the present invention is not limited to the examples given below.

### Examples 1 to 22 and Comparative Examples 1 to 9: Production of Modified Starchy Powder

To soft wheat flour (moisture content: 12 mass%) serving as a starchy powder was added a predetermined amount of a pulverized product of an additive shown in Tables 1 to 4, followed by stirring and mixing with a mixer. Thus, a mixture was obtained (mixture preparation step). Sodium chloride, potassium chloride, calcium chloride, sodium sulfate, calcium sulfate (the above are monovalent or divalent metal salts), iron citrate, or ammonium sulfate was used as the additive. The resulting mixture was heated using a heating apparatus under the conditions shown in Table 1 (heating step). Thus, a modified starchy powder having an average particle size of 150 µm or less was produced. A heating apparatus having a similar configuration to that of the heat-treating and stirring apparatus disclosed in Japanese Patent No. 4112910 was used as the heating apparatus for heating the starchy powder. In the heating step, the mixture to be heated was contained in a containing space of the heating apparatus, the space was hermetically sealed, and the mixture was then heated under hermetically sealed conditions.

### Examples 23 to 27: Production of Modified Starchy Powder

Prior to the heating step, water was sprayed onto the starchy powder and mixed well to thereby adjust the moisture content of the starchy powder as shown in Table 5 (moisture conditioning step). Otherwise, similar procedures to those of Example 1 were performed, and thus, a modified starchy powder having an average particle size of 150 µm or less was produced. Note that, when coarse particles were found in the modified starchy powder, the modified starchy powder was passed through a sieve with an opening size of 150 µm to remove the coarse particles.

### Evaluation Test: Production of Pork Cutlet

Pork cutlets, which are a type of fried coated food, were produced using the modified starchy powders of the examples and the comparative examples. Specifically, a batter was first prepared by mixing components listed in the "Batter (mass%)" column in Tables 1 to 5. Next, the entire surface of a slice of pork loin (200 g per slice, 1 cm thick), which is a solid ingredient, was evenly coated with dusting flour, the solid ingredient was dipped in the batter, the entire surface of the solid ingredient was then coated with bread crumbs, and the solid ingredient was deep-fried in salad oil heated to 170°C for 4 minutes. In this manner, a pork cutlet was produced.

As Reference Example 1, pork cutlets were produced in a similar manner to those of the examples, except that the same starchy powder (soft wheat flour) as that used to produce the modified starchy powder was used instead of a modified starchy powder. As Reference Example 2, pork cutlets were produced in a similar manner to those of the examples, except that an oil/fat-coated starch (trade name: "Millefix D" manufactured by Oji Cornstarch Co., Ltd.) was used instead of a modified starchy powder.

The produced pork cutlets were allowed to cool slightly, stored in a refrigerator for 6 hours, and then stored in an environment at room temperature (ambient temperature: 25°C) for 1 hour. After storage, the pork cutlets were cut into pieces with a kitchen knife, and the adhesion (resistance to coming off the solid ingredients) of the coatings at this time was evaluated. Also, the pork cutlets after storage were eaten, and the flavor and texture of the coatings were evaluated. The evaluations were performed by 10 expert panelists based on the following evaluation criteria, and arithmetic means of evaluation scores given by the 10 panelists were calculated. Tables 1 to 5 show the results.

### Evaluation Criteria for Adhesion of Coating

5 points: Very good. The coating did not come off at all even when the deep-fried food was cut with the kitchen knife.
4 points: Good. The coating hardly came off even when the deep-fried food was cut with the kitchen knife.
3 points: When the deep-fried food was cut with the kitchen knife, the coating in a portion corresponding to 10% to 20% of the entire outline of the cut surface came off.
2 points: Poor. When the deep-fried food was cut with the kitchen knife, the coating in a portion corresponding to more than 20% and 50% or less of the entire outline of the cut surface came off.
1 point: Very poor. When the deep-fried food was cut with the kitchen knife, the coating in a portion corresponding to more than 50% of the entire outline of the cut surface came off.

### Evaluation Criteria for Flavor and Texture of Coating

5 points: Very good. The coating had a very light texture, and no greasiness was perceived at all.
4 points: Good. The coating had a light texture, and no greasiness was perceived.
3 points: The coating had a somewhat light texture, but greasiness was slightly perceived.
2 points: Poor. The coating had a somewhat hard or somewhat glutinous texture, and greasiness was perceived.
1 point: Very poor. The coating had a hard or glutinous texture, and was very greasy.

**Table 1**

| | | | Example | | | | | Comparative Example | | Reference Example | |
|---|---|---|---|---|---|---|---|---|---|---|---|
| | | | 1 | 2 | 3 | 4 | 5 | 1 | 2 | 1 | 2 |
| Mixture preparation step | Starchy powder (parts by mass) | | 100 | 100 | 100 | 100 | 100 | 100 | 100 | 100 | 100 |
| | Additive (parts by mass*¹) | Sodium chloride | 0.5 | - | - | - | - | - | - | - | - |
| | | Potassium chloride | - | 0.5 | - | - | - | - | - | - | - |
| | | Calcium chloride | - | - | 0.5 | - | - | - | - | - | - |
| | | Sodium sulfate | - | - | - | 0.5 | - | - | - | - | - |
| | | Calcium sulfate | - | - | - | - | 0.5 | - | - | - | - |
| | | Iron citrate | - | - | - | - | - | 0.5 | - | - | - |
| | | Ammonium sulfate | - | - | - | - | - | - | 0.5 | - | - |
| Heating step | Heating temperature (temperature of starch powder) (°C) | | 120 | 120 | 120 | 120 | 120 | 120 | 120 | - | - |
| | Heating time (h) | | 1 | 1 | 1 | 1 | 1 | 1 | 1 | - | - |
| Batter (mass%) | Modified starchy powder | | 30 | 30 | 30 | 30 | 30 | 30 | 30 | - | - |
| | Soft wheat flour | | - | - | - | - | - | - | - | 30 | - |
| | Oil/fat-coated starch | | - | - | - | - | - | - | - | - | 30 |
| | Whole egg | | 10 | 10 | 10 | 10 | 10 | 10 | 10 | 10 | 10 |
| | Water | | 60 | 60 | 60 | 60 | 60 | 60 | 60 | 60 | 60 |
| | Total | | 100 | 100 | 100 | 100 | 100 | 100 | 100 | 100 | 100 |
| Evaluation of pork cutlet (on scale of 1 to 5) | Adhesion of coating | | 4.6 | 4.4 | 4.4 | 4.5 | 4.3 | 1.4 | 1.5 | 1.5 | 4.5 |
| | Flavor and texture of coating | | 4.5 | 4.2 | 4.3 | 4.4 | 4.3 | 1.7 | 1.9 | 2.0 | 1.5 |

| | | | | | | | | | | | |
|---|---|---|---|---|---|---|---|---|---|---|---|
| ^{*1}: parts by mass based on the mass of metal ions in the additive | | | | | | | | | | | |

As shown in Table 1, in the examples, in each of which the monovalent or divalent metal salt was added to the starchy powder before heating the mixture, the adhesion of the coating and the flavor and texture of the coating were superior to those of the comparative examples, in each of which the additive (iron citrate or ammonium sulfate) other than the monovalent or divalent metal salts used in the examples was added before heating the mixture.

**Table 2**

| | | | Comparative Example | Example. | | | | | | |
|---|---|---|---|---|---|---|---|---|---|---|
| | | | 3 | 6 | 7 | 8 | 9 | 10 | 11 | 12 |
| Mixture preparation step | Starchy powder (parts by mass) | | 100 | 100 | 100 | 100 | 100 | 100 | 100 | 100 |
| | Additive (parts by mass*¹) | Sodium chloride | 0.1 | 0.2 | 0.3 | 0.4 | 1 | 3 | 5 | 5 |
| Heating step | Heating temperature (temperature of starchy powder) (°C) | | 120 | 120 | 120 | 120 | 120 | 120 | 120 | 120 |
| | Heating time (h) | | 1 | 1 | 1 | 1 | 1 | 1 | 1 | 1 |
| Batter (mass%) | Modified starchy powder | | 30 | 30 | 30 | 30 | 30 | 30 | 30 | 30 |
| | Whole egg | | 10 | 10 | 10 | 10 | 10 | 10 | 10 | 10 |
| | Water | | 60 | 60 | 60 | 60 | 60 | 60 | 60 | 60 |
| | Total | | 100 | 100 | 100 | 100 | 100 | 100 | 100 | 100 |
| Evaluation of pork cutlet (on scale of 1 to 5) | Adhesion of coating | | 4.1 | 4.2 | 4.3 | 4.4 | 4.7 | 4.5 | 4.2 | 4.1 |
| | Flavor and texture of coating | | 3.2 | 4.2 | 4.3 | 4.4 | 4.4 | 4.3 | 4.2 | 4.1 |

| | | | | | | | | | | |
|---|---|---|---|---|---|---|---|---|---|---|
| ^{*1}: parts by mass based on the mass of metal ions in the additive | | | | | | | | | | |

As shown in Table 2, in the examples, in each of which the amount of the additive (monovalent or divalent metal salt) added to the starchy powder in the mixture preparation step was within the range of 0.2 to 5 parts by mass in terms of the mass of metal ions, with respect to 100 parts by mass of the starchy powder, the flavor and texture, in particular, were superior to those of Comparative Example 3, in which this range was not satisfied.

**Table 3**

| | | | Comparative Example | | | Example | | | |
|---|---|---|---|---|---|---|---|---|---|
| | | | 4 | 5 | 6 | 13 | 14 | 15 | 16 |
| Mixture preparation step | Starchy powder (parts by mass) | | 100 | 100 | 100 | 100 | 100 | 100 | 100 |
| | Additive (parts by mass*¹) | Sodium chloride | 0.5 | 0.5 | 0.5 | 0.5 | 0.5 | 0.5 | 0.5 |
| Heating step | Heating temperature (temperature of starchy powder) (°C) | | 60 | 60 | 60 | 70 | 70 | 70 | 70 |
| | Heating time (h) | | 1 | 50 | 200 | 1 | 50 | 100 | 200 |
| Batter (mass%) | Modified starchy powder | | 30 | 30 | 30 | 30 | 30 | 30 | 30 |
| | Whole egg | | 10 | 10 | 10 | 10 | 10 | 10 | 10 |
| | Water | | 60 | 60 | 60 | 60 | 60 | 60 | 60 |
| | Total | | 100 | 100 | 100 | 100 | 100 | 100 | 100 |
| Evaluation of pork cutlet (on scale of 1 to 5) | Adhesion of coating | | 1.5 | 1.5. | 1.6 | 3.1 | 3.5 | 3.7 | 3.9 |
| | Flavor and texture of coating | | 1.9 | 1.9 | 1.9 | 3.0 | 3.6 | 3.8 | 3.9 |

| | | | | | | | | | |
|---|---|---|---|---|---|---|---|---|---|
| ^{*1}: parts by mass based on the mass of metal ions in the additive | | | | | | | | | |

As shown in Table 3, in the examples, in each of which the heating temperature (temperature of the mixture to be heated) during the heating step was 70°C, the adhesion of the coating and the flavor and texture of the coating were superior to those of the comparative examples, in each of which the heating temperature was 60°C.

**Table 4**

| | | | Example | | | | | | Comparative Example | | |
|---|---|---|---|---|---|---|---|---|---|---|---|
| | | | 17 | 18 | 19 | 20 | 21 | 22 | 7 | 8 | 9 |
| Mixture preparation step | Starchy powder (parts by mass) | | 100 | 100 | 100 | 100 | 100 | 100 | 100 | 100 | 100 |
| | Additive (parts by mass*¹) | Sodium chloride | 0.5 | 0.5 | 0.5 | 0.5 | 0.5 | 0.5 | 0.5 | 0.5 | 0.5 |
| Heating step | Heating temperature (temperature of starchy powder) (°C) | | 100 | 100 | 100 | 130 | 130 | 130 | 150 | 150 | 150 |
| | Heating time (h) | | 1 | 50 | 200 | 1 | 50 | 1 | 50 | 200 | 200 |
| Batter (mass%) | Modified starchy powder | | 30 | 30 | 30 | 30 | 30 | 30 | 30 | 30 | 30 |
| | Whole egg | | 10 | 10 | 10 | 10 | 10 | 10 | 10 | 10 | 10 |
| | Water | | 60 | 60 | 60 | 60 | 60 | 60 | 60 | 60 | 60 |
| | Total | | 100 | 100 | 100 | 100 | 100 | 100 | 100 | 100 | 100 |
| Evaluation of pork cutlet (on scale of 1 to 5) | Adhesion of coating | | 4.0 | 4.3 | 4.1 | 4.6 | 4.2 | 3.9 | 2.7 | 2.4 | 2.1 |
| | Flavor and texture of coating | | 3.9 | 4.3 | 4.1 | 4.6 | 4.3 | 3.8 | 2.5 | 2.3 | 2.1 |

| | | | | | | | | | | | |
|---|---|---|---|---|---|---|---|---|---|---|---|
| ^{*1}: parts by mass based on the mass of metal ions in the additive | | | | | | | | | | | |

As shown in Table 4, in the examples, in each of which the heating temperature (temperature of the mixture to be heated) during the heating step was 130°C or below, the adhesion of the coating and the flavor and texture of the coating were superior to those of the comparative examples, in each of which the heating temperature was above 130°C.

**Table 5**

| | | | Example | | | | | |
|---|---|---|---|---|---|---|---|---|
| | | | 1 | 23 | 24 | 25 | 26 | 27 |
| Moisture conditioning step | | | Not performed | Performed | Performed | Performed | Performed | Performed |
| Moisture content of starchy powder (mass%) | | | 12 | 14 | 16 | 18 | 20 | 22 |
| Mixture preparation step | Starchy powder (parts by mass) | | 100 | 100 | 100 | 100 | 100 | 100 |
| | Additive (parts by mass*¹) | Sodium chloride | 0.5 | 0.5 | 0.5 | 0.5 | 0.5 | 0.5 |
| Heating step | Heating temperature (temperature of starchy powder) (°C) | | 120 | 120 | 120 | 120 | 120 | 120 |
| | Heating time (h) | | 1 | 1 | 1 | 1 | 1 | 1 |
| Batter (mass%) | Modified starchy powder | | 30 | 30 | 30 | 30 | 30 | 30 |
| | Whole egg | | 10 | 10 | 10 | 10 | 10 | 10 |
| | Water | | 60 | 60 | 60 | 60 | 60 | 60 |
| | Total | | 100 | 100 | 100 | 100 | 100 | 100 |
| Evaluation of pork cutlet (on scale of 1 to 5) | Adhesion of coating | | 4.6 | 4.7 | 4.8 | 4.8 | 4.7 | 4.6 |
| | Flavor and texture of coating | | 4.5 | 4.7 | 4.8 | 4.7 | 4.6 | 4.5 |

| | | | | | | | | |
|---|---|---|---|---|---|---|---|---|
| ^{*1}: parts by mass based on the mass of metal ions in the additive | | | | | | | | |

### Industrial Applicability

According to the present invention, provided are a method for producing a modified starchy powder with which fried coated food in which a coating has excellent adhesion to a solid ingredient and also has excellent flavor and texture can be produced, a coating material for fried coated food, and a method for producing fried coated food.

## Claims

1. A method for producing a modified starchy powder, comprising:
a step of adding 0.2 to 5 parts by mass of a monovalent or divalent metal salt,
in terms of the mass of metal ions, to 100 parts by mass of a starchy powder to obtain a mixture; and
a heating step of heating the mixture so that a temperature of the starchy powder is in a range of 70°C to 130°C.

2. The method for producing a modified starchy powder according to claim 1, comprising:
a moisture conditioning step of adjusting a moisture content of the mixture to 12 to 22 mass% prior to the heating step.

3. A coating material for fried coated food, comprising a modified starchy powder produced using the production method according to claim 1 or 2.

4. A method for producing fried coated food, comprising:
a step of attaching a coating material containing a modified starchy powder produced using the production method according to claim 1 or 2 to a solid ingredient and then cooking the solid ingredient.
